# EUROPEAN PATENT APPLICATION

(11) **EP 2 314 486 A1**
(43) Date of publication of application: **27.04.2011**
(21) Application number: 10176825.7
(22) Date of filing: 15.09.2010
(51) Int. Cl.: B60T 1/10, B60T 7/04, B60T 13/58

(54) **Brake system in which friction brakes and regenerative brakes are activated according to pedal depression**

(30) Priority: 23.09.2009 SE 0950693
(71) Applicant: Scania CV AB, 151 87 Södertälje (SE)
(72) Inventor: Rickman, Johnny, SE-152 71, SÖDERTÄLJE (SE); Karlsson, Karl, SE-168 65, BROMMA (SE)

(57) **Abstract**

A brake system for a motor vehicle, comprising a friction brake (2) adapted to mechanically apply a braking force to the vehicle,
a regenerative brake (4) adapted to apply a braking force to the vehicle,
a brake pedal (6) adapted to be moved by a driver of the vehicle through a pedal range from not depressed (Pp₀) to fully depressed (Ppₘₐₓ). The brake system further comprises a control unit (8) which comprises a working memory (10) with control instructions that refer inter alia to a brake pedal characteristic that incorporates inter alia a relationship between pedal depression and braking force BF, which control unit is adapted to activate the friction brake and the regenerative brake depending on pedal depression in accordance with said brake pedal characteristic.

The pedal range comprises at least two pedal positions, Pp₁ and Pp₂ which are chosen such that Ppo< Pp₁ < Pp₂< Ppₘₐₓ and which define three range segments A, B and C, where A is bounded by Pp₀ and Pp₁, B by Pp₁ and Pp₂. and C by Pp₂ and Ppₘₐₓ,
the control unit being adapted to control the brakes so that
in segment A, only the regenerative brake is activated to deliver an increasing braking force BF_{A} in response to increasing pedal depression;
in segment B, only the regenerative brake is activated to deliver a substantially constant braking force BF_{B} in response to increasing pedal depression, and in segment C, the friction brake is activated so that an increasing total braking force BF_{C} is applied to the vehicle in response to increasing pedal depression.

## Description

### Field of the invention

The present invention relates to a brake system in accordance with the preamble of the independent claim.

### Background to the invention

Brake systems that comprise both friction brakes and regenerative brakes are known.

With a hybridised vehicle, i.e. a vehicle that can be powered by a combination of a conventional diesel/petrol engine and, for example, an electric motor, there is considerable potential to save fuel. The present invention relates to a brake system for helping the driver to brake optimally as regards energy efficiency, especially when using a hybrid vehicle.

US-2007/0296264 relates to a method for controlling a brake system for a motor vehicle, where the brake system comprises a combination of hydraulic friction brakes and electrical regenerative brakes. The brake pressure for conventional friction brakes is generated by a brake pressure-generating means and by brake pedal movement.

An electrical regenerative brake generally takes the form of an electrical generator by which at least part of the total braking effect is generated. The electrical energy produced is supplied to a storage medium, e.g. a battery, and is reused while driving.

An object of the method according to US-2007/0296264 is that the driver should not notice any difference in braking effect between the novel method and conventional methods because the total braking effect still depends directly on how far the brake pedal is depressed. This is achieved by making braking performance for a conventional brake system with friction brakes appear similar to the braking force component for the electrical regenerative brake by dividing the braking procedure into a number of phases depending on the braking effect demanded, which depends on how far the brake pedal is depressed.

Generally speaking, an electrical regenerative system cannot always generate a maximum braking effect demanded, so electrical regenerative systems are used to meet demands for lower braking effects and friction systems for higher braking effects.

Consequently, the object of US-2007/0296264 is to use electrical regenerative brakes in combination with friction brakes without the driver noticing any difference compared to the use of friction brakes alone. This is achieved by suitably controlling the pressure for the braking medium.

US-6,457,784 relates to a method and a device for determining control values for the braking forces for a brake system comprising friction brakes and electrical regenerative brakes, inter alia with regard to the way the braking forces are to be distributed between different axles.

US-5,853,229 relates to a method and a device for controlling the brake system for an electrically powered motor vehicle. By using a conventional hydraulic or pneumatic friction brake, optimum coordination is achieved between regenerative braking via the electric motor and friction braking, so that as much energy as possible can be recovered. This is done by using the braking force for the drive motor to apply regenerative braking in an initial braking range, with an upper limit defined by a specific brake pedal position, where the friction brake has substantially no influence in this initial range. When the pedal moves past that position, which preferably represents maximum braking force for the electric motor, the friction brake contributes braking force corresponding to the continued pedal depression.

US-2004/0251095 relates to a brake system for a vehicle that comprises both a friction brake and a regenerative brake, where a slight depression of the brake pedal activates only the regenerative brake, but when brake pedal depression increases, the friction brake is also applied. Applying an opposing force to the pedal depression makes the pedal depression seem similar to that which occurs when only friction brakes are used. GB-2297814 relates to a brake system for a vehicle and comprises a regenerative brake and a friction brake. The way this system likewise works is that the regenerative brake is activated first and that the friction brake starts to work subsequently when the pedal is depressed further.

A disadvantage of existing brake systems in hybrid vehicles is that if the driver of a hybrid vehicle demands more braking force than that provided by full regenerative braking, i.e. full electrical braking with the electric motor, the mechanical friction brakes will be used, which means that energy that could be recovered is lost through heating up of the mechanical brakes.

In order to regenerate as much braking energy as possible, it is important not to apply the mechanical brakes unnecessarily. This is currently achieved by braking regeneratively, e.g. electrically, when less retardation is demanded than would be provided by maximum regenerative braking. However, the driver receives no feedback as to whether electrical braking is being used fully or not. Even if the driver were to be made aware of this, e.g. by information on the instrument panel or the like, the present invention represents an aid to help him/her more easily find the brake pedal position that results in maximum utilisation of the braking energy.

It is thus desirable to brake electrically as much as possible in order not to lose energy through braking, which may take place unintentionally, inter alia when the driver brakes with the friction brake.

The overall object of the present invention is to optimise from an energy perspective the braking of a vehicle equipped with both friction brakes/auxiliary brakes and regenerative brakes.

### Summary of the invention

The objects mentioned above are achieved with the invention defined by the independent claim.

Preferred embodiments are defined by the dependent claims.

The present invention provides the driver with feedback as to whether or not he is braking with the wheel brakes. This is achieved by using the vehicle's brake pedal characteristic to help him/her find the position that provides full electrical braking action.

Preferably there should be no feedback by any form of indication, e.g. light or sound, but rather by the driver, due to the brake pedal characteristic having changed, being led to brake in a way that results in the regenerative brake being utilised to a greater extent. In practice, this is noticed by the regenerative brake continuing to work despite the driver depressing the brake pedal to achieve further braking action. The driver does this up to a pedal depression limit value at which the friction brake comes into action. The aim is that the driver should gradually realise that he/she has to start braking earlier in order to avoid the friction brake being used, i.e. to avoid losing energy through braking. The position at which the regenerative braking no longer increases can be clearly detected by an experienced driver.

The present application relates to a brake system that makes the driver aware of the type of brakes (regenerative or mechanical) being used at the time. The foregoing description of a number of patent specifications covers various aspects of regenerative braking in combination with friction braking. None of those specifications give consideration to the fact that the driver has a considerable impact on the results, by the way he/she applies the brakes. The technology that they describe deals with methods aimed at recovering as much braking energy as possible at all times, given the driver's demands. However, they do not consider the fact that the driver can save considerable amounts of energy by changing the way he/she brakes. For the driver to be able to do this, he/she has to be made aware of which types of brakes are being used and be helped, as far as possible, to use the mechanical brakes as little as possible.

According to the present invention, this is achieved by helping the driver to consciously or unconsciously to brake regeneratively to a greater extent, as a result of the changed characteristic for the brake pedal.

The system is thus able to store the energy that is converted during braking, which is achieved according to the invention by adapting the brake pedal characteristic so that as much energy as possible is stored. The transition from energy to heat which occurs when braking with the friction brakes is thus avoided. The invention is suitable for various hybridised vehicles, e.g. series hybrids or parallel hybrids.

### Brief description of the drawings

Figure 1 is a schematic illustration of the present invention.
Figure 2 shows a graph of the brake pedal characteristic according to the state of the art.
Figure 3 shows a graph of the brake pedal characteristic according to the present invention.
Figure 4 shows a graph of the brake pedal characteristic according to an alternative embodiment of the present invention.

### Detailed description of the preferred embodiments of the invention

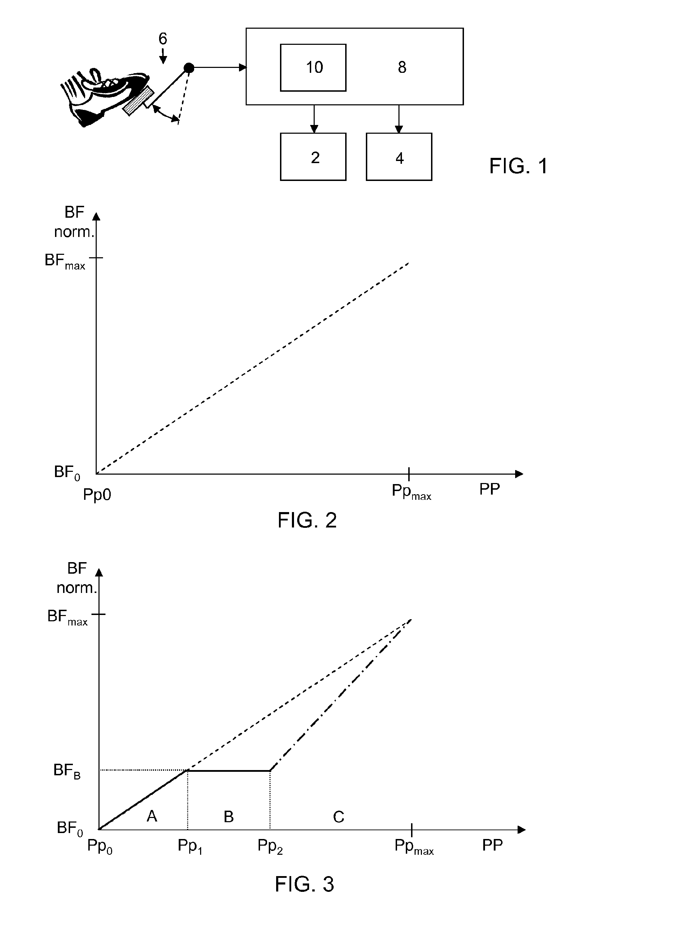

Figure 1 is a schematic illustration of a brake system for a motor vehicle according to the present invention.

The brake system comprises a friction brake 2 adapted to apply a braking force mechanically to the vehicle, and a regenerative brake 4 adapted to apply braking force to the vehicle. A brake pedal 6 is arranged and adapted to be moved by a driver of the vehicle through a pedal range, indicated by a double arrow, from not depressed (Pp₀) to fully depressed (Ppₘₐₓ). The pedal positions Pp₀ and Ppₘₐₓ can be seen in figure 3. The brake pedal comprises appropriate sensors (not shown) which deliver a signal depending on the pedal depression; the signal is sent to a control unit 8 which includes a working memory 10. The working memory has control instructions stored in it which inter alia implement the desired brake pedal characteristic for the brake system. The brake pedal characteristic indicates inter alia the relationship between pedal depression and braking force BF. The control unit is adapted to activate the friction brake and the regenerative brake depending on pedal depression in accordance with the brake pedal characteristic. This is indicated in the figure by arrows to each brake.

According to the invention, the pedal range comprises at least two pedal positions, Pp₁ and Pp₂, which are chosen such that Ppo< Pp₁ < Pp₂< Ppₘₐₓ and which define three range segments A, B and C, where A is bounded by Pp₀ and Pp₁, B by Pp₁, and Pp₂ and C by Pp₂ and Ppₘₐₓ. Figure 3 shows the pedal positions and range segments and associated braking forces BF.

The control unit is adapted to control the brakes so that
in segment A, only the regenerative brake is activated to deliver an increasing braking force BF_{A} in response to increasing pedal depression; in segment B, only the regenerative brake is activated to deliver a substantially constant braking force BF_{B} in response to increasing pedal depression, and in segment C, the friction brake is activated so that an increasing total braking force BF_{C} is applied to the vehicle in response to increasing pedal depression.

The substantially constant braking force BF_{B} is defined such that the braking force within segment B may be allowed to vary by a maximum of 5%. An example of how the braking force may be allowed to vary is that the braking force at the end of segment B is 5% higher than at the start of the range, and that the braking force increases linearly within the range.

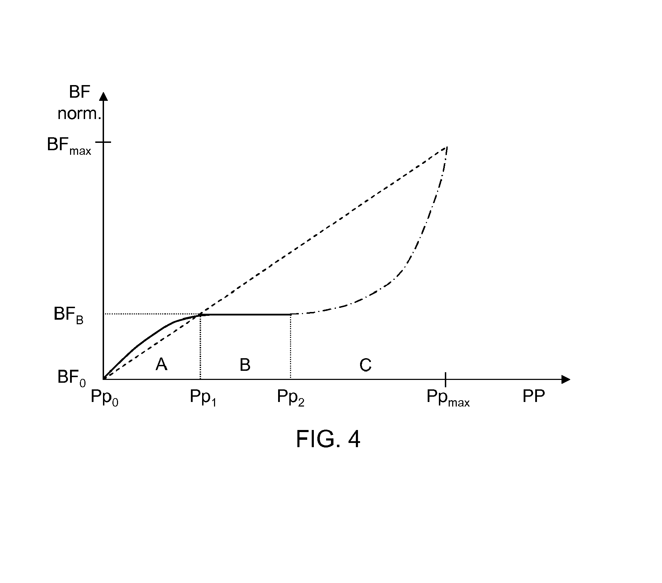

Preferably, the braking force BF_{A} in segment A is substantially linearly dependent on the pedal depression. Alternatively, the braking force may exhibit a non-linear increase depending on the pedal depression, e.g. a gradual transition to the substantially constant braking force in segment B (see figure 4).

Preferably, the total braking force BF_{C} in segment C is substantially linearly dependent on the pedal depression. Alternatively the braking force may exhibit a non-linear increase depending on the pedal depression, e.g. a gradual increase that initially in segment C is substantially constant (see figure 4).

Of course, further pedal positions can be introduced in order to adapt pedal depression optimally to the brake systems that are available. For example, a pedal position may be introduced in segment A and one in segment C, which will contribute to increasing the precision of the control.

The expression friction brakes or mechanical brakes here covers generally brakes that employ friction to generate a braking force for the vehicle, and is a generic term that comprises inter alia wheel brakes and auxiliary brakes, such as retarders. A type of retarder can be mechanically integrated with the gearbox and interacts electronically with other control systems in the vehicle.

According to a preferred embodiment, the regenerative brake is an electrical machine that is used as a brake.

The brake pedal characteristic for the vehicle depends inter alia on which types of brakes are part of the brake system and how they are intended to interact, inter alia on the basis of the driver's wishes.

A brake pedal characteristic shown in figure 3 is merely a schematic example of how range segments A, B and C can be selected, the most important aspect being that the braking force BF_{B} is constant across part of the pedal range.

According to a preferred embodiment, segment B makes up 5-90% of the whole pedal range. Preferably, pedal position Pp₁ is within 5-90% of the whole pedal range, and pedal position Pp₂ is within 10-95% of the whole pedal range. These positions can be selected independently of each other.

The pedal positions Pp₁ and Pp₂ are consequently variable and may depend on a number of factors, including the types of brakes that the vehicle has and the wishes of the driver. These positions can be set manually by input of instructions via an interface on the occasion of testing, delivery or service, or by the driver.

Alternatively, the pedal positions can be set adaptively and automatically, e.g. depending on the vehicle's various brake systems, the driver's driving style, the weight of the vehicle, current road gradient, the topology of the route ahead, which is obtainable via map data and GPS, or a combination of these parameters.

The brake pedal characteristic is implemented in the working memory for the control unit, with appropriate control instructions in the form of an adapted computer programme in which changes can easily be introduced by appropriate reprogramming.

There are a number of different ways of transmitting the brake pedal's movements to the brake system and its various brakes.

Preferably, the pedal acts upon a braking medium in a hydraulic or pneumatic system in which the pressure in the braking medium is a parameter in brake system choice. For example, detected pressures of the braking medium relative to various threshold values may determine when the various brake systems are to be involved.

The brake pedal's position in the pedal range is detected in an appropriate manner, e.g. electrically by means of a simple resistance circuit, and a signal containing information about the pedal position is delivered to the control unit.

Figure 2 shows a graph of the brake pedal characteristic for a normally functioning brake pedal, where the standardised braking force BF / the retardation (*y* axis) is linearly dependent on the position of the brake pedal (x axis). It illustrates the relationship between pedal depression and braking force that is desirable according to the state of the art described above in the background section.

Consequently, according to the present invention illustrated in figure 3, a plateau is incorporated in the brake pedal characteristic, segment B, where the driver effects optimum braking regeneratively (e.g. electrically). This means that the driver initially has more braking force at his/her disposal when the brake pedal is depressed more, segment A. Continued depression of the brake pedal past the position that represents full regenerative braking (Pp₁) will achieve substantially no greater braking action than full regenerative braking. This plateau (segment B), i.e. the range of brake pedal position which provides full regenerative braking, constitutes a predetermined part of the whole movement range for the brake pedal and is consequently bounded by a lower position threshold, pedal position Pp₁, and an upper position threshold, pedal position Pp₂. When the brake pedal is depressed past the upper position threshold, the friction brakes are activated. Full depression of the brake pedal provides full braking action for the friction brakes. Figure 3 shows an example of a brake pedal characteristic in accordance with the present invention.

In figure 3, the normal characteristic is represented by a broken line, regenerative braking by a continuous line and friction braking by a chain-dotted line. According to the invention, a major portion of the pedal's range of movement is used for regenerative braking.

This will hopefully result in the driver not unnecessarily demanding more effect than is provided by regenerative braking. In addition, the plateau will help the driver find the position that represents optimum braking so that he/she can be better prepared for the next time braking is required.

The brake pedal characteristic according to the present invention affords the driver the possibility of being directly or indirectly helped to brake more regeneratively in that he/she will act as a regulator and depress the brake pedal more if the braking response is not as desired. As a plateau is incorporated in the brake pedal characteristic, the hope is to increase the proportion of regenerative braking and reduce the use of the mechanical friction brakes. This will result in reduced fuel consumption and less use of mechanical brakes.

According to an alternative embodiment, the system comprises also an indicating unit adapted to delivering a signal which indicates the position of the brake pedal relative to the brake pedal characteristic. This may be an audible signal, a light signal or a combination of the two. For example, a green indication might be displayed as long as the brake pedal is in segment A or B, and the fact of coming close to Pp₂ might be indicated, for example, by the green indication gradually changing to red.

The present invention is not limited to the preferred embodiments described above. Various alternatives, modifications and equivalents may be used. The above embodiments should therefore not be regarded as limiting the scope of protection of the invention, which is defined by the attached claims.

## Claims

1. A brake system for a motor vehicle, comprising
a friction brake (2) adapted to mechanically apply a braking force to the vehicle,
a regenerative brake (4) adapted to apply a braking force to the vehicle,
a brake pedal (6) adapted to be moved by a driver of the vehicle through a pedal range from not depressed (Pp₀) to fully depressed (Ppₘₐₓ),
a control unit (8) which comprises a working memory (10) with control instructions that refer inter alia to a brake pedal characteristic that incorporates inter alia a relationship between pedal depression and braking force BF, which control unit is adapted to activate the friction brake and the regenerative brake depending on pedal depression in accordance with said brake pedal characteristic,
**characterised in that**
the pedal range comprises at least two pedal positions, Pp₁ and Pp₂ which are chosen such that Ppo< Pp₁ < Pp₂< Ppₘₐₓ and which define three range segments A, B and C, where A is bounded by Pp₀ and Pp₁, B by Pp₁, and Pp₂, and C by Pp₂ and Ppₘₐₓ,
the control unit being adapted to control the brakes so that
in segment A, only the regenerative brake is activated to deliver an increasing braking force BF_{A} in response to increasing pedal depression;
in segment B, only the regenerative brake is activated to deliver a substantially constant braking force BF_{B} in response to increasing pedal depression, and
in segment C, the friction brake is activated so that an increasing total braking force BF_{C} is applied to the vehicle in response to increasing pedal depression.

2. A brake system in accordance with claim 1, in which the increase in braking force is substantially linearly dependent on the pedal depression in segment A.

3. A brake system in accordance with claim 1, in which the increase in braking force is substantially linearly dependent on the pedal depression in segment C.

4. A brake system in accordance with claim 1, in which with substantially constant braking force BF_{B} it is intended that the braking force within segment B may be allowed to vary by a maximum of 5%.

5. A brake system in accordance with claim 1, in which the regenerative brake is an electric machine that is used as a brake.

6. A brake system in accordance with any one of claims 1-5, in which the segment B makes up 5-90% of the whole pedal range.

7. A brake system in accordance with any one of claims 1-6, in which the pedal position Pp₂ is within 10-95% of the whole pedal range.

8. A brake system in accordance with any one of claims 1-7, in which the pedal position Pp₁ is within 5-90% of the whole pedal range.

9. A brake system in accordance with any one of claims 1-8, in which the pedal positions Pp₁ and Pp₂ are variable.

10. A brake system in accordance with any one of claims 1-9, in which the pedal positions Pp₁ and Pp₂ are set adaptively and automatically, depending inter alia on the vehicle's various brake systems, the driver's driving style, the weight of the vehicle, current road gradient, the topology of the route ahead, or a combination of these parameters.

11. A brake system in accordance with any one of claims 1-10, in which the system also comprises an indicating unit adapted to deliver a signal which indicates the position of the brake pedal relative to the brake pedal characteristic.

12. A brake system in accordance with claim 11, in which the indicating signal is an audible signal, a light signal or a combination of the two.
